(19) **Europäisches Patentamt European Patent Office Office européen des brevets**

(11) **EP 2 339 255 B1**

(12) **FASCICULE DE BREVET EUROPEEN**

(45) Date de publication et mention
de la délivrance du brevet:
**10.08.2016 Bulletin 2016/32**

(51) Int Cl.:
*F24F 11/00* *(2006.01)* *G05D 23/19* *(2006.01)*

(21) Numéro de dépôt: **10194857.8**

(22) Date de dépôt: **14.12.2010**

(54) **Procédé de contrôle optimisé d'un dispositif de régulation en température**

Verfahren zur optimierten Steuerung eines Temperaturreglers

Method for optimised control of a temperature control device

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2009 FR 0959079**

(43) Date de publication de la demande:
**29.06.2011 Bulletin 2011/26**

(73) Titulaire: **Electricité de France
75008 Paris (FR)**

(72) Inventeurs:
 • **Barbouchi, Sami
  75019 Paris (FR)**
 • **Coince, Anne-Sophie
  77210 Avon (FR)**

(74) Mandataire: **Cabinet Plasseraud
  66, rue de la Chaussée d'Antin
  75440 Paris Cedex 09 (FR)**

(56) Documents cités:
 **EP-A1- 0 688 085   FR-A1- 2 793 643
 FR-A1- 2 866 944   GB-A- 2 278 207
 US-A1- 2005 005 621**

**Description**

L'invention concerne le contrôle des dispositifs de régulation en température, et en particulier le contrôle optimisé de dispositifs de régulation comprenant des pompes à chaleur afin de permettre l'effacement de consommation de ces pompes à chaleur.

La mise à disposition de dispositifs de régulation en température moins consommateurs en énergie, ainsi que l'optimisation de leur régulation, est devenue récemment un enjeu, tant du point de vue économique que du point de vue écologique. A titre d'exemple, en France, le marché des pompes à chaleur (PAC) s'est considérablement développé, tant dans le domaine du logement neuf qu'en rénovation de logements anciens.

L'essor de ces dispositifs de régulation en température de type récent alimente la crainte d'une amplification des consommations d'électricité, en particulier les jours les plus froids, en cas de diffusion massive.

Des réflexions ont donc été menées afin de trouver des solutions de pilotage de charge des usages thermosensibles pour répondre à ce risque potentiel. Concevoir des installations effaçables constitue un nouveau levier d'optimisation en aval de l'équilibre offre-demande.

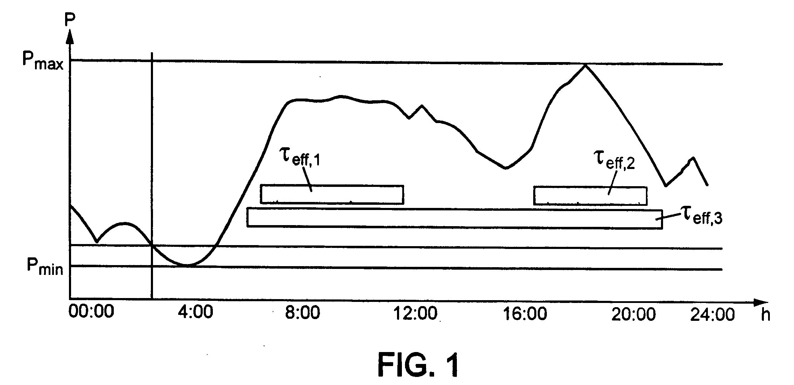

La figure 1 illustre ce principe d'effacement de consommation, lequel permet de réduire la consommation énergétique de certains équipements à des moments précis.

Sur cette figure 1 est illustré un exemple de courbe temporelle de consommation énergétique d'un ensemble d'équipement oscillant entre une puissance minimale $P_{min}$ et une puissance maximale $P_{max}$. On voit bien sur cette courbe que des pics de consommation ont lieu à certaines périodes, par exemple entre 7 heures et 12 heures, ou entre 16 heures et 20 heures, lesquels peuvent coïncider avec des périodes de facturation en heures pleines où le niveau de facturation est plus élevé.

Le principe d'effacement consiste à réduire la puissance consommée en arrêtant certains équipements non essentiels sur certaines plages de temps choisies, par exemple où la consommation énergétique est élevée. Sur la figure 1, un premier format d'effacement peut consister à réduire la puissance consommée sur deux périodes distinctes $\tau_{eff,1}$ et $\tau_{eff,2}$ correspondant aux périodes de pics de consommation précitées. Un autre format d'effacement peut consister, plus grossièrement, à réduire la puissance consommée sur une unique période $\tau_{eff,3}$ durant laquelle la puissance consommée dépasse un certain seuil.

Pour réaliser l'effacement proprement dit, la plupart des logiques de pilotage existantes, en ce qui concerne les dispositifs de régulation en température, cherchent à minimiser la facture énergétique du client, notamment en diminuant le temps de fonctionnement en heures pleines, c'est-à-dire pendant les heures où la consommation d'énergie est facturée à un niveau plus élevé. Ces algorithmes de pilotage se content d'opérer en maximisant et minimisant le fonctionnement des dispositifs de régulation en température pendant respectivement les plages d'heures creuses et d'heures pleines, mais sans modifier la consigne en température du système de régulation en température.

De telles logiques de pilotage sont présentées, par exemple, dans l'article « Optimisation de pilotage d'installation résidentielle de chauffage par micro-cogénération » de Guillaume Foggia et al.

La possibilité d'anticiper ou de décaler les consommations énergétiques des systèmes de régulation en température suivant respectivement les plages heures pleines ou heures creuses a par ailleurs été brièvement évoquée (cf. « Gestion optimale des consommations d'énergie dans les bâtiments », thèse de Ky Le), sans détailler plus en profondeur la méthode à suivre.

Ces méthodes de pilotage sont par ailleurs établies du point de vue du client, afin de diminuer la consommation énergétique et surtout le coût de cette consommation pour celui-ci. Ces méthodes n'intègrent donc pas le point de vue de l'énergéticien, qui peut avoir intérêt à arrêter plus ou moins longtemps certains systèmes de régulation en température pour pouvoir gérer la demande en énergie.

La demande US 2005/0005621 décrit un procédé de régulation d'un système de climatisation dans lequel une durée optimale de pré-refroidissement est calculée en plusieurs itérations, en fonction d'une valeur minimale de température de confort à obtenir en début de période de pointe de tarification. Un tel procédé peut induire une déviation importante de la température par rapport à une température de consigne indiquée par l'utilisateur, si la région de confort couvre une large plage de températures.

Similairement, la demande EP 0 688 085 décrit un procédé de régulation d'un système de chauffage présentant une phase de pré-chauffage. Dans ce procédé, la température interne varie également entre les valeurs minimales et maximales de la région de confort, ce qui peut être ressenti par l'utilisateur si la région de confort couvre une large plage de températures.

Enfin, la demande FR 2 793 643 décrit un procédé de commande d'appareils électriques de chauffage selon des valeurs prises par un signal de niveau de confort.

Ce procédé dépend donc lui aussi des niveaux de confort fixés par l'utilisateur.

La présente invention a pour objet de remédier aux inconvénients précités.

En particulier, un des objets de l'invention est d'améliorer la régulation d'un ou plusieurs dispositifs de régulation en température comprenant une pompe à chaleur, afin de pouvoir effectuer un effacement adéquat et réduire l'impact sur la courbe de charge.

Un autre objet de l'invention est de parvenir à cette régulation tout en assurant un niveau de confort acceptable dans l'habitat chauffé au moyen du dispositif régulé.

Un autre objet de l'invention est de permettre à l'utilisateur de diminuer le coût de sa consommation électrique, tout en conservant un niveau de confort acceptable.

Elle propose à cet effet un procédé de contrôle optimisé d'au moins un dispositif de régulation en température comprenant une pompe à chaleur, le procédé comprenant la désactivation de la pompe à chaleur pendant une période de désactivation comprise au moins en partie dans une période durant laquelle s'applique un premier niveau de facturation et l'activation de la pompe à chaleur pendant au moins une période d'activation comprise au moins en partie dans une période durant laquelle s'applique un deuxième niveau de facturation inférieur au premier niveau de facturation. Le procédé comprend :

l'estimation de la valeur, pour un instant de référence choisi entre lesdites périodes, d'une température de consigne de fonctionnement de la pompe à chaleur ;

la détermination d'une température de fonctionnement optimisée par rapport à une température de fonctionnement de la pompe à chaleur dans un mode de régulation classique, ladite température de fonctionnement optimisée s'écartant de ladite valeur estimée de la température de consigne de fonctionnement à l'instant de référence au moins d'un écart prédéterminé pour compenser au cours de la première desdites périodes un effacement réalisé au cours de la deuxième desdites périodes ; et

la détermination de la durée de la première desdites périodes d'un point de vue chronologique en fonction de ladite température de fonctionnement optimisée, ladite durée étant calculée afin que la température de fonctionnement, mesurée pour évaluer le fonctionnement de la pompe à chaleur, évolue pendant ladite première période pour atteindre, audit instant de référence, ladite température de fonctionnement optimisée.

Grâce à cet écart prédéterminé, l'impact de la première période de fonctionnement sur le logement chauffé par le dispositif de régulation en température est compensé au cours de la deuxième période de fonctionnement.

Avantageusement, la durée de cette première période apparaissant chronologiquement est calculée selon la formule :

$$\Delta \tau_1 = \frac{\left| T_{opt} - T_{cons}(t_1) \right|}{var_T},$$

dans laquelle $T_{opt}$ désigne la valeur optimisée du paramètre de fonctionnement, $T_{cons}(t_1)$ désigne la valeur estimée du paramètre de référence à l'instant de référence et $var_T$ désigne une vitesse de variation déduite de la mesure dudit paramètre de fonctionnement. Avec une telle formule, il est possible de calculer facilement l'écart de température nécessaire à la mise en oeuvre du procédé.

Avantageusement, lorsque la mesure du paramètre de fonctionnement présente une pluralité de cycles pendant lesquels ledit paramètre de fonctionnement varie entre deux valeurs minimales en passant par une valeur maximale, la vitesse de variation ci-avant est déduite de la vitesse de variation du paramètre de fonctionnement entre la valeur maximale et l'une des valeurs minimale lors d'au moins un desdits cycles. La vitesse de variation peut ainsi être obtenue facilement en observant le(s) cycle(s) précédent(s) de fonctionnement et en extrapolant le comportement du paramètre de fonctionnement du dispositif de régulation en température durant ceux-ci.

Dans un mode de réalisation préféré dans lequel le dispositif de régulation en température est utilisé pour chauffer au moins une pièce dans un bâtiment, la valeur du paramètre de référence est estimée en fonction de l'estimation de la température extérieure audit bâtiment à l'instant de référence. Cela permet d'optimiser la régulation sur la base de simples prévisions météorologiques.

De préférence, lorsque au moins une pièce d'un bâtiment chauffée par le dispositif de régulation en température est soumise à une température ambiante et que le paramètre de référence dépend d'une température de consigne d'air ambiant, la pompe à chaleur retourne dans un mode de régulation classique par rapport au paramètre de référence si, durant la période d'activation et/ou de désactivation, l'écart en valeur absolue entre ladite température ambiante et la température de consigne d'air ambiant est supérieur à une écart prédéterminé de confort, la température de fonctionnement du dispositif de régulation étant régulé en fonction de ladite température de consigne de fonctionnement dans ledit mode de régulation classique. Ceci permet de garantir que le confort de l'utilisateur du lieu n'est pas dégradé par le procédé de régulation.

Dans un mode de réalisation préféré, la période d'activation précède la période de désactivation. Grâce à l'inertie thermique du dispositif de régulation en température et du bâtiment associé, un tel mode de réalisation permet un effacement plus long, et est particulièrement avantageux pour un effacement dont le début coïncide avec le début d'une période d'heures pleines.

Dans un autre mode de réalisation préféré, la période d'activation succède à la période de désactivation. Ce mode de réalisation est plus particulièrement avantageux pour un effacement dont la fin coïncide avec la fin d'une période d'heures pleines, afin dans le but d'optimiser la consommation en heures pleines.

Plus particulièrement, lorsque la pompe à chaleur peut fonctionner dans un mode de chauffage et/ou de refroidissement, l'activation de la pompe à chaleur pendant une période d'activation consiste à positionner la pompe à chaleur dans l'un desdits modes. Le procédé ci-avant s'applique donc aussi bien aux dispositifs de régulation réversibles que non-réversibles.

De façon avantageuse, la au moins une période d'activation et la période de désactivation sont substantiellement adjacentes temporellement. L'enchainement direct des phases d'activation et de désactivation permet d'optimiser le procédé pour offrir une plage temporelle d'effacement plus grande.

Dans un mode de réalisation avantageux où la pompe à chaleur est une pompe à chaleur de type air/eau ou eau/eau, le paramètre de référence dépend alors de la température de consigne de retour d'eau et/ou de départ d'eau de la pompe à chaleur et le paramètre de fonctionnement dépend de la température de retour d'eau et/ou de départ d'eau de la pompe à chaleur. Ce mode de réalisation est simple à mettre en oeuvre dans la mesure où la température de retour d'eau ou de départ d'eau est particulièrement aisée à mesurer.

Dans un autre mode de réalisation avantageux où la pompe à chaleur est une pompe à chaleur de type air/air, le paramètre de référence dépend de la température de consigne d'air de soufflage et/ou de reprise de la pompe à chaleur et le paramètre de fonctionnement dépend de la température d'air de soufflage et/ou de reprise de la pompe à chaleur.

De préférence, la période de désactivation est comprise au moins en partie dans une période durant laquelle s'applique un premier niveau de facturation et la au moins une période d'activation est comprise au moins en partie dans une période durant laquelle s'applique un deuxième niveau de facturation inférieur au premier niveau de facturation, ce qui permet une réduction de la facture énergétique de l'utilisateur.

La présente invention vise aussi un module de contrôle optimisé d'au moins un dispositif de régulation en température comprenant une pompe à chaleur, ce module comprenant des moyens de transmission, aptes à envoyer audit au moins un dispositif de régulation en température un signal d'activation pour activer la pompe à chaleur pendant au moins une période d'activation et un signal de désactivation pour désactiver la pompe à chaleur pendant une période de désactivation, et des moyens de détermination aptes à déterminer, pour chaque dispositif de régulation en température à réguler, au moins la durée de la première desdites périodes d'un point de vue chronologique au moyen du procédé de contrôle optimisé ci-avant.

La présente invention vise également un système de régulation en température optimisé en consommation énergétique, comprenant une pluralité de dispositifs de régulation en température, comprenant chacun une pompe à chaleur, et un module de contrôle optimisé ci-avant, ledit module de contrôle optimisé étant apte à contrôler chacun desdits dispositifs de régulation en température au moyen du procédé de contrôle optimisé ci-avant.

La présente invention vise enfin un produit de programme d'ordinateur enregistré sur un support de mémorisation pour exécution par un ordinateur permettant, lors de l'exécution par un ordinateur, de mettre en oeuvre le procédé de contrôle optimisé ci-avant au niveau d'au moins un dispositif de régulation en température comprenant une pompe à chaleur.

Le procédé, objet de l'invention, sera mieux compris à la lecture de la description et à l'observation des dessins ci-après dans lesquels, outre la figure 1 déjà décrite :

- la figure 2 illustre les étapes d'un procédé 100 de contrôle optimisé d'un dispositif de régulation en température comprenant une pompe à chaleur selon la présente invention ;
- la figure 3 illustre un exemple d'évolution temporelle de la température de consigne de fonctionnement et de la température de fonctionnement du dispositif de régulation en température lorsque le procédé 100 de contrôle optimisé est utilisé ;
- la figure 4 est un schéma synoptique illustrant le fonctionnement particulier d'une pompe à chaleur de type air/eau ;
- la figure 5A illustre les étapes d'un procédé 100' de contrôle par activation anticipée d'un dispositif de régulation en température comprenant une pompe à chaleur selon un premier mode principal de réalisation du procédé de contrôle optimisé de la présente invention ;
- la figure 5B illustre l'évolution de la température de retour d'eau de la pompe à chaleur par rapport à la température de consigne d'eau avec un tel procédé 100' de contrôle par activation anticipée, dans le cas particulier d'une surchauffe anticipée ;
- la figure 5C illustre l'évolution de la température de l'air ambiant chauffé au moyen de la pompe à chaleur par rapport à la température de la consigne d'air ambiant fixée par l'utilisateur avec un tel procédé 100' de contrôle par activation anticipée, dans le cas particulier d'une surchauffe anticipée ; et

- la figure 6 illustre les étapes d'un procédé 100" de contrôle par activation retardée d'un dispositif de régulation en température comprenant une pompe à chaleur selon un deuxième mode principal de réalisation du procédé de contrôle optimisé de la présente invention.

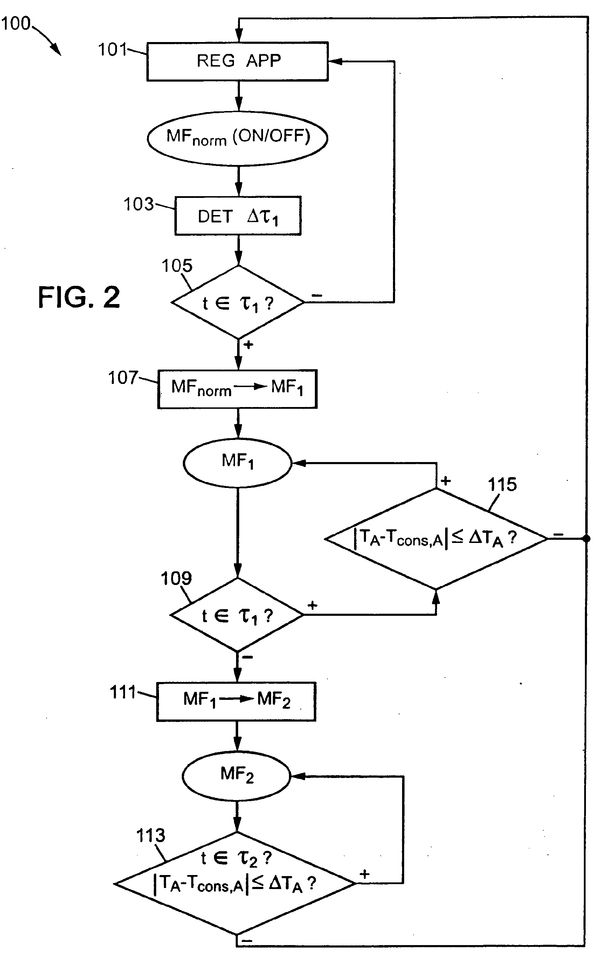

On se réfère tout d'abord à la **figure 2,** sur laquelle sont illustrées les étapes d'un procédé 100 de contrôle optimisé d'un dispositif de régulation en température comprenant une pompe à chaleur selon la présente invention.

Le terme de dispositif de régulation en température employé ici recouvre tout dispositif apte à agir sur la température d'un lieu, d'une pièce d'un bâtiment ou d'un équipement, que ce soit par un mode de chauffage ou de refroidissement.

Un tel dispositif peut être soit spécialisé dans l'un de ces modes, comme par exemple une chaudière dans le cas du chauffage ou un système de climatisation dans le cas du refroidissement, soit capable de fonctionner dans ces deux modes comme c'est le cas quand il comprend une pompe à chaleur réversible par exemple.

Au début du procédé 100 de contrôle optimisé, le dispositif de régulation en température à contrôler se trouve dans mode de régulation classique, initié lors d'une étape de régulation 101.

Dans un tel mode de régulation classique, un paramètre de fonctionnement du dispositif de régulation en température, comme par exemple sa température de fonctionnement, est régulé en fonction d'un paramètre de référence, et la pompe à chaleur du dispositif de régulation en température est activée ou désactivée afin de faire coïncider substantiellement ce paramètre de fonctionnement avec le paramètre de référence.

A titre d'exemple, le paramètre de fonctionnement peut être la température de fonctionnement de la pompe à chaleur du dispositif de régulation en température, régulée en fonction d'une température de consigne de fonctionnement, laquelle peut elle-même varier et dépendre de la température de consigne d'air ambiant $T_{cons,A}$ d'une pièce chauffée par le dispositif de régulation en température, ainsi que des variations de la température extérieure $T_{ext}$ à ce logement.

Le procédé comprend deux étapes consécutives 107 et 111 de mise en opération de la pompe à chaleur du dispositif respectivement dans un premier mode de fonctionnement $MF_1$ pendant une première période $\tau_1$, puis dans un deuxième mode de fonctionnement $MF_2$ différent du premier mode de fonctionnement $MF_1$ pendant une deuxième période $\tau_2$. Ces deux modes de fonctionnement $MF_1$, $MF_2$ correspondent soit à la désactivation, soit à l'activation de la pompe à chaleur du dispositif de régulation en température.

Pour une pompe à chaleur fonctionnant en tout-ou-rien, la désactivation correspond à l'arrêt de la pompe à chaleur et l'activation correspond à la mise en marche de la pompe à chaleur. Si cependant le dispositif de régulation en température présente plusieurs modes de fonctionnement à des niveaux de puissance différents, c'est-à-dire de consommation énergétique différente, l'activation correspond alors au choix d'un mode de fonctionnement de puissance élevée, et la désactivation correspond au choix d'un mode de fonctionnement de puissance faible relativement au mode d'activation.

L'alternance d'un mode de désactivation avec un mode d'activation permet de désactiver la pompe à chaleur pendant une certaine période, et ainsi de procéder à un effacement de consommation durant cette période, tout en compensant cette désactivation par une activation de la pompe à chaleur à une autre période. Ceci revient à décaler dans le temps l'activation du dispositif de régulation en température afin de permettre l'effacement de consommation, en particulier durant les heures pleines de consommation.

Préalablement à ces étapes 107 et 111, on va déterminer, lors d'une étape de détermination 103, la durée de la première des périodes ci-avant d'un point de vue chronologique, c'est-à-dire la durée $\Delta\tau_1$ de la période $\tau_1$. en fonction de paramètres liés à la régulation du dispositif de régulation en température.

Le paramètre utilisé principalement pour faire cette détermination est le paramètre de référence défini ci-avant. Sa valeur est estimée pour un instant $t_1$ de référence choisi entre lesdites périodes $\tau_1$ et $\tau_2$, et on peut déduire de cette estimation la durée $\Delta\tau_1$ nécessaire au dispositif pour équilibrer les phases d'activation et de désactivation.

En particulier, on peut procéder au calcul de la durée $\Delta\tau_1$ afin que le paramètre de fonctionnement défini ci-avant évolue pendant la période $\tau_1$ pour atteindre, à l'instant $t_1$ de référence, une certaine valeur optimisée s'écartant de la valeur estimée du paramètre de référence au moins d'un écart prédéterminé.

Cet écart est positif si la première période $\tau_1$ est une période d'activation en mode de chauffage ou négatif si la première période $\tau_1$ est une période d'activation en mode de refroidissement, ce qui permet d'équilibrer les phases d'activation et de désactivation d'un point de vue thermique.

Par contre, cet écart est négatif si la première période $\tau_1$ est une période de désactivation suivie d'une deuxième période $\tau_2$ d'activation en mode de chauffage ou positif si la première période $\tau_1$ est une période de désactivation suivie d'une deuxième période $\tau_2$ d'activation en mode de refroidissement, ceci toujours pour équilibrer les phases d'activation et de désactivation d'un point de vue thermique.

Dans un exemple utilisant la température de fonctionnement de la pompe à chaleur comme paramètre de fonctionnement, ceci revient en ce que la valeur optimisée $T_{opt}$ de la température de fonctionnement diffère, pour l'instant $t_1$, de la valeur de la température de consigne de fonctionnement, estimée pour cet instant $t_1$ et ainsi notée $T_{cons}(t_1)$, par un écart de température $\Delta T_{opt}$, selon la relation suivante :

$$(1) \qquad T_{opt} = T_{cons}(t_1) + \Delta T_{opt}$$

L'estimation de la valeur de la température de consigne de fonctionnement, à l'instant $t_1$, peut par exemple se faire grâce à l'estimation de la température extérieure $T_{ext}$ au lieu chauffé par le dispositif de régulation en température, par exemple au moyen de prévisions météorologiques.

La valeur de cet écart $\Delta T_{opt}$ peut être choisie en fonction des installations concernées, par exemple de l'inertie du logement destiné à être chauffé et du réseau de régulation en température à alimenter, de la zone climatique où se situe ce logement, ou de la puissance thermique délivrée par le dispositif de régulation en température. Ainsi, lorsqu'un effacement est envisagé pendant un certain intervalle de temps, l'écart en température $\Delta T_{opt}$ est déterminé de sorte à compenser cet effacement en termes de confort pour l'utilisateur.

Dans la pratique, l'écart $\Delta T_{opt}$ est un paramètre qui peut varier, en valeur absolue, entre 0°C (pas de surchauffe réelle) et quelques degrés Celsius (de 2°C à 4°C, par exemple) suivant le type d'installation et de logement concernés.

Une fois cette température de fonctionnement optimisée $T_{opt}$ déterminée, la détermination proprement dite de la durée $\Delta \tau_1$ de la première période $\tau_1$ peut être effectuée.

Cette durée $\Delta \tau_1$ dépend ainsi de l'écart $\Delta T_{opt}$ souhaité entre la valeur optimisée du paramètre de fonctionnement à l'instant $t_1$ et la valeur estimée du paramètre de référence pour ce même instant $t_1$. En particulier, pour calculer cette durée $\Delta \tau_1$, on peut utiliser la vitesse de variation $var_T$ du paramètre de fonctionnement tel que mesuré précédemment, selon la formule (2) suivante :

$$(2) \qquad \Delta \tau_1 = \frac{\Delta T_{opt}}{var_T}$$

Le paramètre $var_T$ de vitesse de variation peut être un paramètre connu d'avance, par exemple établi statistiquement en fonction de la plage horaire considérée lors de mesures antérieures. Cependant, dans un mode de réalisation particulier, la pompe à chaleur présente une pluralité de cycles de fonctionnement pendant lesquels la température de fonctionnement varie entre une valeur minimale et une valeur maximale.

Dans un tel cas, lorsque la détermination 103 a lieu dans un cycle donné, la durée $\Delta \tau_1$ de la première période peut être déterminée en fonction du ou des cycle(s) précédent(s), dans la mesure où le comportement de la pompe à chaleur en température évolue d'une façon progressive et continue.

Ainsi, par exemple, la vitesse de variation en température $var_T$ utilisée pour un cycle donné peut être choisie pour correspondre à la vitesse de variation mesurée lors du cycle de fonctionnement précédent. Dans un tel cas, la vitesse de variation $var_T$ respecte donc la formule (3) suivante :

$$(3) \qquad var_T = \frac{T_{fonc}(t_f) - T_{fonc}(t_i)}{t_f - t_i}$$

Dans cette formule, $T_{fonc}(t_f)$ correspond à la valeur du paramètre de fonctionnement de la pompe à chaleur à l'instant final $t_f$ correspondant à la fin de la mise en position de la pompe à chaleur dans le même premier mode de fonctionnement $MF_1$ lors du cycle précédent et $T_{fonc}(t_i)$ correspond à la valeur du paramètre de fonctionnement de la pompe à chaleur à l'instant initial $t_i$ correspondant au début de la mise en position de la pompe à chaleur dans le même premier mode de fonctionnement $MF_1$ lors du cycle précédent.

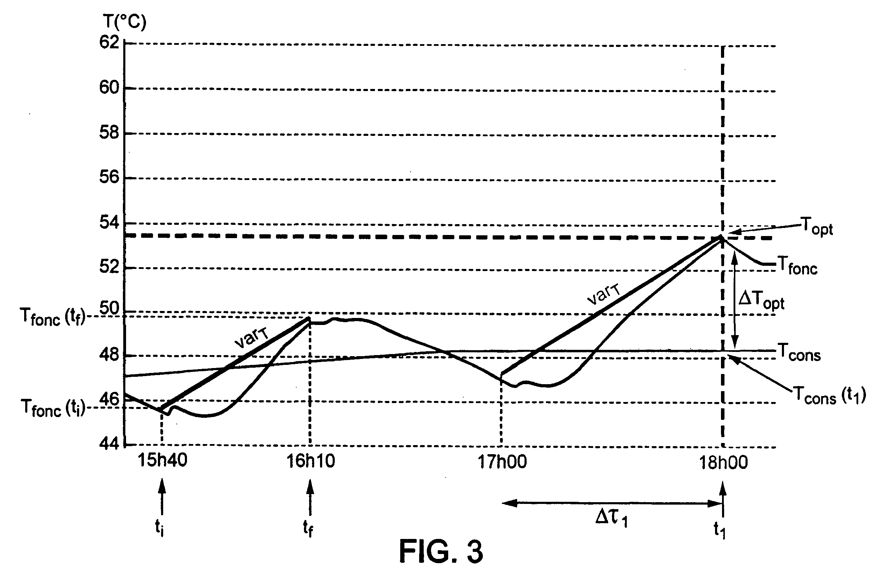

Les calculs des différents paramètres ci-avant se comprendront mieux à la lueur de la figure 3, laquelle illustre le principe de la présente invention.

Sur cette figure 3 sont représentées les évolutions temporelles, d'une part, de la température de consigne de fonctionnement $T_{cons}$ de la pompe à chaleur du dispositif de régulation en température et, d'autre part, de la température de fonctionnement $T_{fonc}$ de cette pompe à chaleur. Il est apparent, sur cette figure, que la température de fonctionnement oscille autour de la température de consigne de fonctionnement afin de se régler sur cette dernière en fonction de l'évolution de certains paramètres, par exemple de la température extérieure $T_{ext}$.

Si l'on se place dans le cycle de fonctionnement correspondant à un premier mode de fonctionnement $MF_1$ de la pompe à chaleur dans lequel celle-ci est activée, et où la température de fonctionnement croit, c'est-à-dire pendant le cycle autour de 18 heures, on peut utiliser le cycle précédent de croissance de la température de fonctionnement, qui se trouve être entre 15h40 et 16h10. Ces deux instants correspondant respectivement aux instants $t_i$ et $t_f$ de la formule (3), et les valeurs de températures associées à ces instants déterminent respectivement $T_{fonc}(t_i)$ et $T_{fonc}(t_f)$ de cette formule (3).

Le paramètre $var_T$ de vitesse de variation, applicable au cycle pour lequel la durée $\tau_1$ doit être calculée, peut ainsi être obtenu grâce à la formule (3). Graphiquement, sur la figure 3, un tel paramètre $var_T$ a correspond à la pente de la droite joignant les températures de fonctionnement minimale et maximale pour le cycle précédente de fonctionnement.

Une fois ce paramètre $var_T$ calculé, la durée $\Delta\tau_1$ peut être retrouvée par le biais de la formule (2). Graphiquement, sur la figure 3, cela se traduit par le fait de tracer une droite partant du point $(T_{opt} ; t_1)$ et de pente $var_T$ identique au cycle précédent, et de trouver l'intersection de cette droite avec la courbe de la température de fonctionnement $T_{fonc}$, ce qui donne une durée $\Delta\tau_1$ d'environ une heure sur la figure 3. La période $\tau_1$ démarre donc à 17 h et se termine à 18 h dans le cas de la figure 3.

Pour revenir au procédé 100 illustré à la figure 2, une fois la durée $\Delta\tau_1$ calculée lors de l'étape 103, on vérifie si, pour un instant t donné, on se situe dans le premier intervalle de temps $\tau_1 = [t_1 - \Delta\tau_1 ; t_1]$, lors de l'étape 105.

Si tel n'est pas le cas, la pompe à chaleur reste dans son fonctionnement normal et la régulation classique du dispositif se poursuit par retour à l'étape 101.

Si par contre on se situe temporellement dans le premier intervalle de temps $\tau_1 = [t_1 - \Delta\tau_1 ; t_1]$, alors la pompe à chaleur est placée dans un premier mode de fonctionnement $MF_1$ correspondant à cette première période $\tau_1$. au cours d'une première étape de mise en position de fonctionnement 107.

Un tel mode de fonctionnement $MF_1$ peut être considéré comme étant un fonctionnement bloqué, dans le sens où ce n'est plus la régulation classique qui s'applique (au cours de laquelle la température de fonctionnement oscille autour d'une température de consigne, par succession de phases d'arrêt et de marche de la pompe à chaleur). Ainsi, la pompe à chaleur est soit mis en marche durant tout ce premier intervalle de temps $\tau_1$, soit arrêté durant tout ce premier intervalle de temps $\tau_1$, et ce en fonction de la température optimisée à atteindre.

Le positionnement de la pompe à chaleur dans ce premier mode de fonctionnement $MF_1$ est maintenu pendant la période $\tau_1$ au moyen d'une boucle de contrôle comprenant une étape de vérification 109, par exemple périodique, vérifiant que l'on se situe toujours temporellement dans la période $\tau_1$.

Après la fin de cette période $\tau_1$, et après cet instant $t_1$, la pompe à chaleur est basculée dans un deuxième mode de fonctionnement $MF_2$, différent du premier mode de fonctionnement $MF_1$ ci-avant, pendant une deuxième période $\tau_2$, lors d'une deuxième étape de mise en position de fonctionnement 111.

De préférence, cette deuxième période $\tau_2$ succède directement à la première période $\tau_1$, afin d'optimiser le principe du procédé. Cependant, ces intervalles peuvent aussi être séparés par un écart temporel $\Delta t_\epsilon$. Ainsi, si la pompe à chaleur est bloquée en mode activé durant la période $\tau_1$, il est positionné en mode désactivé durant la période $\tau_2$, et réciproquement.

Le positionnement de la pompe à chaleur dans ce deuxième mode de fonctionnement $MF_2$ est maintenu pendant la durée de la période $\tau_2$ au moyen d'une boucle de contrôle comprenant une étape de vérification 113, par exemple périodique, vérifiant que l'on se situe toujours, pour un instant t, dans cette période $\tau_2$.

Afin de garantir le confort de l'utilisateur du dispositif de régulation en température, il est également possible, lors de l'étape de vérification 113, de vérifier que la température ambiante de l'air chauffé grâce au dispositif de régulation en température, notée $T_A$, ne s'éloigne pas trop d'une température prédéterminée de consigne d'air ambiant $T_{cons,A}$, fixée par l'utilisateur, par exemple, au moyen d'un thermostat.

Pour cela, on compare la valeur absolue de l'écart entre la température ambiante $T_A$ et la température de consigne d'air ambiant $T_{cons,A}$ avec un écart prédéterminé de confort $\Delta T_A$, par exemple 0,5°C, voire 1 °C.

Si l'écart entre température ambiante et température de consigne d'air ambiant dépasse en valeur absolue cet écart prédéterminé de confort $\Delta T_A$, il convient de revenir au mode de régulation classique utilisé à l'étape 101 afin de diminuer cet écart et faire en sorte que la température ambiante retrouve une valeur plus proche de la consigne d'air ambiant, pour maintenir le confort de l'utilisateur pendant la période $\tau_2$.

Une étape de vérification 115 de la température ambiante similaire à l'étape de vérification 113 peut être également insérée dans la boucle de maintien en position dans le premier mode de fonctionnement du dispositif de régulation en température, afin de revenir à un mode de régulation classique si jamais le premier mode de fonctionnement $MF_1$ induit un écart trop important de la température ambiante par rapport à la température de consigne d'air ambiant, afin de maintenir cette fois-ci le confort de l'utilisateur durant cette première période $\tau_1$.

Dans un mode principal de réalisation où une période d'activation précède une période de désactivation servant à effacer une consommation, l'inertie thermique aussi bien du bâtiment chauffé que du dispositif de régulation en température va permettre de compenser la période de désactivation, dans la mesure où la température ambiante obtenue à l'issue de la période d'activation va évoluer pendant la période de désactivation d'une manière confortable pour l'utilisateur.

Ainsi, dans un mode de réalisation particulier de ce mode principal de réalisation, particulièrement applicable en hiver, où la première période d'activation est une période de surchauffe, la température ambiante obtenue à l'issue de cette première période est surélevée dans des proportions acceptables pour l'utilisateur et retombera, toujours dans des proportions acceptables pour l'utilisateur grâce à l'inertie thermique, pendant la période de désactivation à cause du froid extérieur. Cet exemple particulier s'applique par exemple à une pompe à chaleur utilisée en mode de chauffage.

Dans un autre mode de réalisation particulier de ce mode principal de réalisation, particulièrement applicable en été, où la première période d'activation est une période de refroidissement, la température ambiante obtenue à l'issue de cette première période est sous-évaluée dans des proportions acceptables pour l'utilisateur et augmentera, toujours dans des proportions acceptables pour l'utilisateur grâce à l'inertie thermique, pendant la période de désactivation, à cause de la chaleur extérieure. Cet autre exemple particulier s'applique par exemple pour une pompe à chaleur utilisée en mode de climatisation, connecté à un plancher chauffant-refroidissant ou des ventilo-convecteurs.

Dans un autre mode principal de réalisation où une période de désactivation servant à effacer une consommation précède une période d'activation, l'inertie thermique aussi bien du bâtiment chauffé que du dispositif de régulation en température va permettre de compenser la période de désactivation, dans la mesure où la température ambiante obtenue à l'issue de la période désactivation reste dans une limite de confort pour l'utilisateur.

Afin d'illustrer le principe de la présente invention, un mode de réalisation particulier va maintenant être décrit dans lequel la pompe à chaleur du dispositif de régulation en température utilisé est une pompe à chaleur de type air/eau.

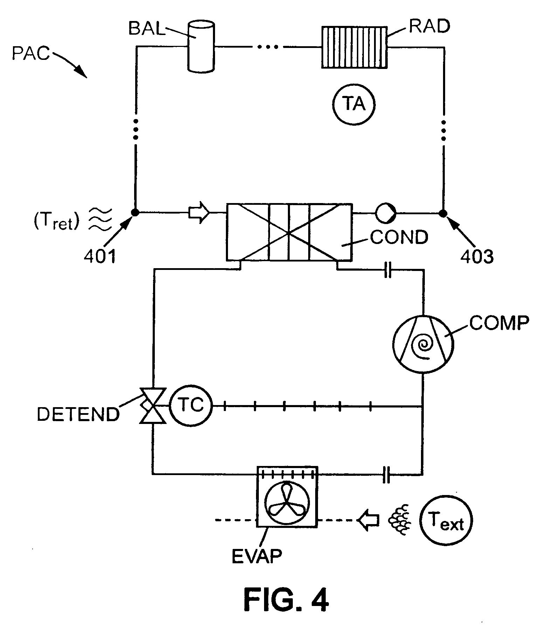

Le principe d'une pompe à chaleur de type air/eau est rappelé sur la figure 4.

La pompe à chaleur PAC illustrée sur cette figure 4 est constituée d'un circuit fermé et étanche dans lequel circule un fluide frigorigène à l'état liquide ou gazeux selon les organes qu'il traverse. En l'occurrence, une pompe à chaleur typique est un dispositif constitué de quatre organes : l'évaporateur EVAP, le compresseur COMP, le condenseur COND et le détendeur DETEND.

La pompe à chaleur de type air/eau est associée, par le biais du condensateur COND, à un circuit fermé de régulation en température dans lequel circule de l'eau chaude servant à chauffer divers éléments tels qu'un radiateur RAD ou un ballon d'eau chaude BAL.

Le principe de fonctionnement est le suivant : la pompe à chaleur PAC prélève de la chaleur provenant de l'air environnant extérieur, lequel se trouve à une température $T_{ext}$, et cette chaleur prélevée à l'extérieur est transférée, par le biais de l'évaporateur EVAP, au fluide frigorigène qui se vaporise.

Le compresseur COMP aspire alors le fluide frigorigène vaporisé pour opérer une compression élevant sa température.

Ensuite, par le biais du condenseur COND, le fluide frigorigène chauffé cède sa chaleur, en se condensant et en revenant à l'état liquide, à l'eau d'un circuit de régulation en température ou directement à l'air du lieu à chauffer. L'air ambiant du lieu à chauffer présente ainsi une température $T_A$. Une fois revenu à son état liquide, le fluide frigorigène passe alors par le détendeur DETEND, lequel abaisse la pression du liquide frigorigène afin d'amorcer ainsi sa vaporisation.

La régulation du dispositif de pompe à chaleur décrit sur la figure 4 est faite préférentiellement en fonction de la température mesurée à un point précis du dispositif, laquelle doit être calée autant que possible sur une température de consigne.

Dans le cas d'une pompe à chaleur de type air/eau, il est avantageux de mesurer la température dite « de retour d'eau », notée $T_{ret}$, qui est mesurée à l'endroit 401 du système où l'eau retourne dans le condensateur COND après avoir chauffé les différents éléments RAD ou BAL. Cette température $T_{ret}$ présente l'avantage de pouvoir être mesurée facilement en température et donc de permettre une régulation aisée du dispositif. Alternativement, la température dite « de départ d'eau », mesurée au point 403 du système, peut également être utilisée pour cette régulation.

Ainsi, dans ce mode de particulier, le paramètre de fonctionnement défini précédemment correspond à la température $T_{ret}$ de retour d'eau de la pompe à chaleur et le paramètre de référence défini précédemment correspond à la température de consigne de retour d'eau $T_{cons,ret}$.

Par ailleurs, la température ambiante $T_A$ définie précédemment correspond à la température de l'air ambiant de la pièce dans laquelle est installé le radiateur RAD et la température prédéterminée de consigne d'air ambiant $T_{cons,A}$ définie précédemment correspond à la température de consigne d'air ambiant, par exemple fixée par l'utilisateur au moyen d'un thermostat.

Ce faisant, la régulation de la pompe à chaleur se fait par comparaison de la température $T_{ret}$ de retour d'eau par rapport à la température de consigne de retour d'eau $T_{consret}$. Dans un souci de confort pour l'utilisateur, il est préférable que cette régulation se fasse en veillant à ce que la température ambiante $T_A$ ne s'écarte pas trop de la température prédéterminée de consigne d'air ambiant $T_{cons,A}$, par exemple en veillant à ce que la différence, en valeur absolue, entre la température ambiante $T_A$ et la température de consigne d'air ambiant $T_{cons,A}$ ne dépasse pas un écart déterminé de confort $\Delta T_A$.

Avec une telle pompe à chaleur de type air/eau, il est possible d'implémenter le procédé 100 de régulation selon la présente invention suivant deux modes principaux de réalisation, un premier mode principal de réalisation dans lequel une période d'activation précède une période de désactivation et un deuxième mode principal de réalisation dans lequel une période de désactivation précède une période d'activation.

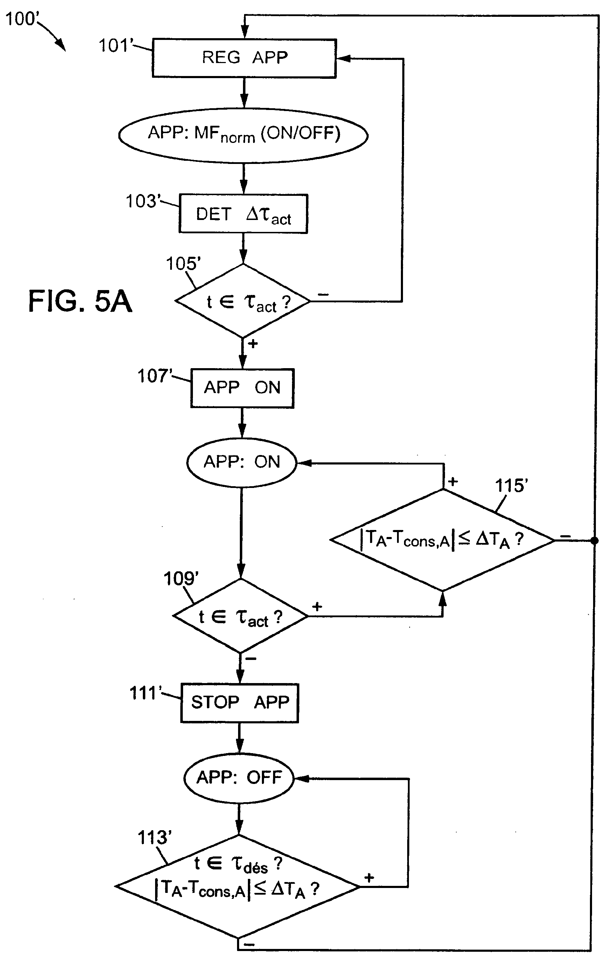

La figure 5A illustre les étapes d'un procédé 100' d'optimisation selon le premier de ces modes de réalisation principaux où l'activation de la pompe à chaleur du dispositif de régulation précède la désactivation de la pompe à chaleur de ce dispositif.

Afin de mieux illustrer ce premier mode principal de réalisation, on va se placer ici dans un premier mode particulier de réalisation correspondant au cas d'une activation en surchauffe de la pompe à chaleur, lequel sera défini comme étant un procédé de régulation par surchauffe anticipée.

Le principe d'un tel procédé par surchauffe anticipée est d'augmenter la température du circuit de régulation en température par rapport à la consigne avant une plage d'heures pleines, afin de permettre l'effacement pendant cette dernière plage. Dans ce cas, la formule (1) décrit une consigne de loi d'eau modifiée pour une surchauffe, et l'écart $\Delta T_{opt}$ a une valeur positive.

Les étapes 101'-115' d'un tel procédé 100' de régulation par surchauffe correspondent aux étapes 101-115 du procédé général 100 illustrées à la figure 2. Le procédé 100' de régulation par surchauffe se caractérise cependant particulièrement en ce que le premier mode de fonctionnement, déclenché lors de l'étape d'activation 107', correspond à l'activation de la pompe à chaleur pendant une période $\tau_{act}$, déterminée lors de l'étape de détermination 103', afin que la température $T_{ret}$ de retour d'eau atteigne une valeur optimale $T_{opt}$ supérieure d'un écart $\Delta T_{opt}$ par rapport à la valeur de la température de consigne de retour d'eau $T_{cons,ret}$ ($t_1$) prévue à l'instant $t_1$.

La valeur optimale de la température de consigne de retour d'eau à l'instant $t_1$ peut être calculée, par exemple, grâce à la loi d'eau de retour pour la température extérieure $T_{ext}$ ($t_1$) estimée à l'instant $t_1$, laquelle peut être déterminée par prévision météorologique, par exemple.

En ce qui concerne l'écart $\Delta T_{opt}$, un tel paramètre peut varier entre 0°C (pas de surchauffe réelle) et quelques degrés Celsius, suivant le type d'installation et de logement à chauffer.

On distingue ainsi 3 cas de circuits hydrauliques :

- Circuit sans ballon (seulement avec radiateurs) ;
- Circuit avec ballon en série ; et
- Circuit avec ballon de découplage (raccordement en parallèle).

Dans les deux premiers cas, les débits dans la pompe à chaleur et dans le circuit de chauffage sont identiques. Par conséquent, la surchauffe aura une influence non négligeable sur la température d'air intérieur $T_A$. Dans un tel cas, il est préférable de choisir l'écart $\Delta T_{opt}$ en tenant compte des contraintes de confort mentionnées précédemment, dans une fourchette relativement étroite.

Par contre, le dernier cas où la pompe à chaleur chauffe le ballon de découplage offre un degré de liberté supplémentaire, étant donné que la pompe à chaleur peut charger le ballon sans charger le circuit de chauffage. Dans un tel cas, l'écart $\Delta T_{opt}$ peut être choisi dans une fourchette plus large (2,4 °C, voire plus), ce qui permet d'allonger d'autant le temps disponible d'effacement et donc le gain potentiellement associé.

Il est également possible d'augmenter l'écart $\Delta T_{opt}$ d'une marge de sécurité en majorant la surchauffe quand la loi d'eau utilisé pour obtenir la température de retour d'eau est calculée en fonction de la température extérieure prévue à l'instant $t_1$ correspondant à la fin de la première période $\tau_{act}$, c'est-à-dire si $T_{ret}$ ($t_1$) = f($T_{ext}$($t_1$)).

En effet, dans le cas de l'effacement hivernal, la température extérieure à 18h est souvent plus froide que la température extérieure durant la surchauffe, et si cette majoration n'est pas prise en compte, la température atteinte par le dispositif peut ne pas être assez élevée. Il est donc avantageux d'utiliser des prévisions météorologiques pour déterminer la température d'air extérieur à 18h, et ainsi avoir une estimation plus précise de la température de retour d'eau à atteindre à 18h.

Ce fonctionnement en surchauffe anticipée a lieu durant une période $\tau_{act}$, puis est suivi par la désactivation de la pompe à chaleur, initiée lors d'une étape de désactivation 111', pendant une période $\tau_{dés}$. La température $T_{ret}$ de retour d'eau diminue alors régulièrement à partir de la valeur optimale $T_{opt}$.

Un algorithme peut être utilisé pour déterminer la durée $\Delta \tau_{act}$ de la première période $\tau_{act}$ de surchauffe, et par conséquent l'instant de démarrage de la pompe à chaleur pour la mise en surchauffe. Comme indiqué précédemment, cette durée $\Delta \tau_{act}$ peut être déterminée grâce au calcul de la pente de montée en température d'eau de retour du réseau à partir des points de démarrage et d'arrêt de la pompe à chaleur, au moyen éventuellement d'une approximation linéaire, par exemple pour des cycles précédents de régulation en température.

À chaque pas de temps, un automate évalue le temps nécessaire pour augmenter ladite température jusqu'à la valeur donnée par la loi d'eau de retour modifiée projetée à l'instant $t_1$.

L'interruption de la pompe à chaleur, durant une deuxième période $\tau_{dés}$, engendre un effacement particulièrement efficace si cette deuxième période $\tau_{dés}$ recouvre au moins partiellement une période durant laquelle la consommation est habituellement élevée (heures pleines). Pour garantir ceci, il est particulièrement avantageux de faire coïncider substantiellement le début de cette deuxième période $\tau_{dés}$ avec le début d'une période d'heures pleines.

Par ailleurs, la mise en marche forcée de la pompe à chaleur, durant une première période $\tau_{act}$, est avantageuse énergétiquement si cette période $\tau_{act}$ recouvre au moins partiellement une période durant laquelle la consommation est habituellement faible (heures creuses). Pour garantir ceci, il est particulièrement avantageux de faire coïncider substantiellement la fin de cette période $\tau_{act}$ avec la fin d'une période d'heures creuses.

On voit bien, au travers des modes de réalisations présentés ci-dessus, qu'il est particulièrement avantageux, lorsque la fin d'une période d'heures creuses est directement suivie par le début d'une période d'heures pleines, de faire coïncider substantiellement aussi bien la fin de la première période $\tau_{act}$ que le début de la deuxième période $\tau_{dés}$ avec l'instant de transition entre période d'heures creuses et pleines.

Ainsi, le fait de surchauffer d'abord de façon anticipée puis d'arrêter la pompe à chaleur, c'est-à-dire de procéder un effacement, en heures pleines permet de maintenir une température ambiante adéquate, grâce à l'inertie thermique globale des installations et du logement, tout en réduisant la consommation durant les heures pleines.

De plus, comme il est courant que le niveau de facturation soit plus élevé en heures pleines qu'en heures creuses, un tel procédé 100' de régulation par surchauffe permet également de procéder à des économies.

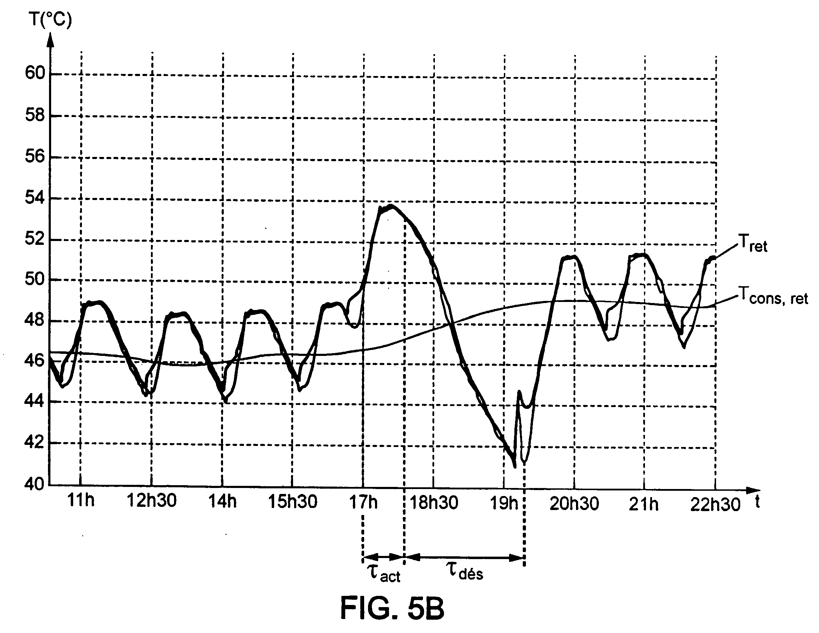

La figure 5B illustre l'évolution de la température de retour d'eau $T_{ret}$ par rapport à la température de consigne de retour d'eau $T_{cons,ret}$ avec un tel procédé 100' d'optimisation par surchauffe anticipée.

Sur cette figure 5B, la température de consigne de retour d'eau $T_{cons,ret}$ dépend de la température de consigne d'air ambiant intérieur $T_{cons,A}$ fixée par l'utilisateur de la pompe à chaleur. On voit bien que cette température de consigne de retour d'eau $T_{cons,ret}$ varie dans le temps au cours de la journée, en fonction entre autres de la température d'air extérieur environnant $T_{ext}$. Ainsi, le refroidissement de l'air extérieur après 19 heures entraîne logiquement une augmentation de la température de consigne de retour d'eau $T_{cons,ret}$ afin de maintenir autant que possible la température $T_A$ de l'air ambiant intérieur aux alentours de la température de consigne d'air ambiant intérieur $T_{cons,A}$.

La température de retour d'eau $T_{ret}$ de la pompe à chaleur est régulée autour de cette température de consigne de retour d'eau $T_{cons,ret}$ afin de caler au mieux ces deux températures. Cette régulation se traduit, en mode classique, par une suite de cycles alternant l'activation et la désactivation de la pompe à chaleur (sur la figure 5B, les cycles de 11 h à 12 h 30, de 12 h 30 à 14 h, ou de 14 h à 15 h 30).

Lorsque l'on désire effacer de la consommation sur un intervalle de temps $\tau_{dés}$ allant de 17 h 45 à 19 h 15, ce qui correspond à une période habituelle d'heures pleines, on peut utiliser le procédé de régulation 100' introduit ci-avant. Ce faisant, la durée du premier intervalle $\tau_{act}$ est calculée pour être de 45 minutes et cet intervalle $\tau_{dés}$ de mise surchauffe de la pompe à chaleur va donc de 17 h à 17 h 45.

Ainsi, de 17 h à 17 h 45, la pompe à chaleur est activée en mode chauffage selon l'étape d'activation 107', puis désactivée de 17 h 45 à 19 h 15 selon l'étape de désactivation 111'. Passé 19 h 15, la pompe à chaleur retourne dans un mode de régulation classique par cycles.

Il est apparent, sur la figure 5B, que la surchauffe de la pompe à chaleur durant une première période de 45 minutes a permis l'arrêt de la pompe à chaleur durant l'heure et demie qui a suivi. La période d'arrêt correspondant à une période de forte consommation, le procédé 100' rend possible l'effacement de consommation pendant une telle période.

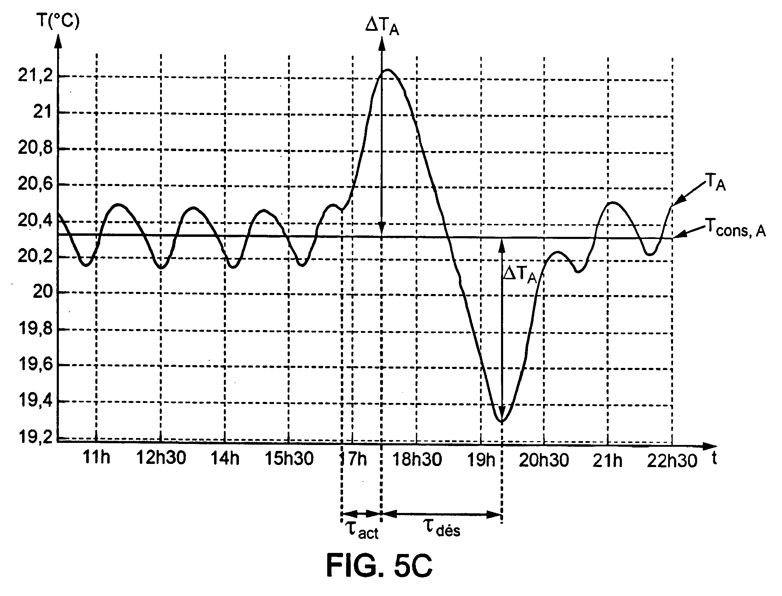

La figure 5C illustre, elle, l'évolution de la température de l'air ambiant intérieur $T_A$ par rapport à la température de la consigne d'air ambiant $T_{cons,A}$ fixée par l'utilisateur de la pompe à chaleur régulée par un tel procédé 100' de surchauffe anticipée.

Sur cette figure 5C, on peut voir que la température de consigne d'air ambiant $T_{cons,A}$ est fixée à 20.3 °C. La température de l'air ambiant intérieur $T_A$ oscille d'abord autour de cette valeur lorsque la pompe à chaleur se trouve dans un mode de régulation classique correspondant à l'étape 101'.

Lorsque, suite à l'étape d'activation 107' de la pompe à chaleur pendant une première période $\tau_{act}$ allant approximativement de 17h à 17h45, la pompe à chaleur est mise en marche pour que la température de retour d'eau $T_{ret}$ atteigne la valeur optimale $T_{opt}$, la température d'air ambiant $T_A$ va augmenter continuellement.

Suite à cette première $\tau_{act}$, la désactivation 111' de la pompe à chaleur a alors lieu pendant une deuxième période $\tau_{dés}$ durant plus longtemps, allant approximativement de 17h45 à 19h30. La température ambiante $T_A$ décroît alors continuellement, tout en restant dans une plage $\Delta T_A$ de confort acceptable de température de 1 °C autour de la température de consigne $T_{cons,A}$.

Une fois cette deuxième période $\tau_{dés}$ de temps terminée, la pompe à chaleur retourne dans un mode de régulation classique, ce qui se caractérise par un retour de la température ambiante $T_A$ aux environs de la température de consigne $T_{cons,A}$. Ainsi la surchauffe durant un court intervalle de temps $\tau_{act}$ permet l'arrêt de la pompe à chaleur pendant un intervalle de temps $\tau_{dés}$ plus long.

Bien entendu, le principe de ce premier mode principal de réalisation peut s'appliquer également à un autre mode de réalisation particulier où l'activation de la pompe à chaleur, lorsque celle-ci est réversible, est un mode de refroidissement auquel cas la valeur de température optimale $T_{opt}$, à atteindre est inférieure à l'estimation de la température de consigne de retour d'eau $T_{cons,ret}(t_1)$, c'est-à-dire que l'écart $\Delta T_{opt}$ devra prendre une valeur négative, afin de compenser par anticipation le réchauffement correspondant à la désactivation du dispositif de refroidissement durant la deuxième période $\tau_{dés}$.

Ainsi, alors que le mode de surchauffe anticipée est particulièrement adéquat en hiver, quand il faut effacer la consommation des dispositifs chauffants pendant les périodes d'heures pleines, le mode de refroidissement anticipé est particulièrement approprié en été, quand il faut effacer la consommation des dispositifs refroidissant à certaines périodes très chaudes de la journée.

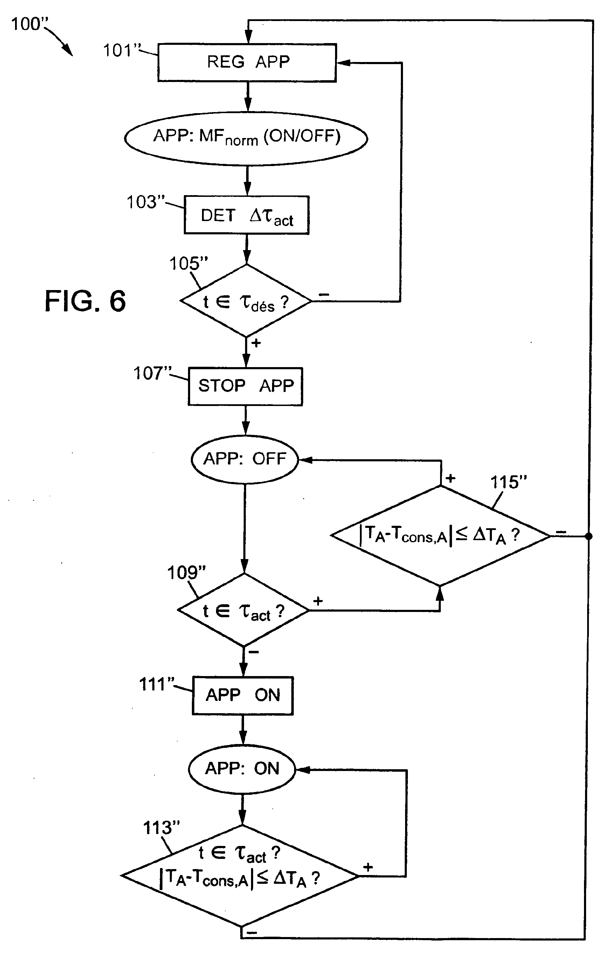

La **figure 6** illustre les étapes d'un procédé 100" de régulation selon un deuxième mode principal de réalisation dans lequel la désactivation de la pompe à chaleur du dispositif précède son activation. Le procédé 100" peut donc être qualifié de procédé de contrôle par activation retardée.

Le procédé 100" de contrôle par activation retardée est en quelque sorte le symétrique temporel du procédé 100' de contrôle par activation anticipée. Les étapes d'un tel procédé 100" de contrôle par activation retardée en température correspondent aux étapes du procédé général de contrôle optimisé 100 illustrées à la figure 2.

Le procédé 100" de contrôle par activation retardée se caractérise en particulier en ce que le premier mode de fonctionnement $MF_1$, déclenché lors d'une étape de désactivation 107", correspond à la désactivation de la pompe à chaleur du dispositif de régulation pendant une période de désactivation $\tau_{dés}$ déterminée lors de l'étape de détermination 103", afin que le paramètre de fonctionnement utilisé pour évaluer le dispositif de régulation atteigne une valeur séparé d'un certain écart de l'estimation d'une valeur du paramètre de référence utilisé pour réguler ce dispositif.

En mode particulier de contrôle par surchauffe retardée, cet écart est négatif puisque la première période de désactivation du chauffage entraînant un abaissement supplémentaire en température à l'instant $t_1$, tandis que dans le mode particulier de contrôle par refroidissement retardé, cet écart est positif dans la mesure où la première période de désactivation du refroidissement entraîne une augmentation supplémentaire en température à à l'instant $t_1$,

La désactivation de la pompe à chaleur du dispositif de régulation durant la période $\tau_{dés}$ est suivie par l'activation de la pompe à chaleur de ce dispositif lors d'une étape d'activation 111" effectuée pendant une période $\tau_{act}$.

Avec ce procédé 100" de contrôle par activation retardée, la désactivation de la pompe à chaleur du dispositif de régulation en température durant une première période, recouvrant de préférence au moins partiellement une période d'heures pleines, permet ainsi le fonctionnement forcé de la pompe à chaleur du dispositif de régulation pendant une deuxième période recouvrant de préférence au moins partiellement une période d'heures creuses.

Comme pour le premier mode principal d'activation anticipée, un algorithme peut être utilisé ici pour permettre de déterminer la durée de la période de désactivation $\tau_{dés}$ et par conséquent l'heure de début d'application de cette désactivation, par exemple par calcul de la pente d'évolution précédente du paramètre de fonctionnement.

Toujours afin de bien illustrer ce deuxième mode principal de réalisation, on se place toujours dans un exemple particulier de réalisation correspondant au cas où l'activation de la pompe à chaleur correspond à un mode de chauffage. Ce mode particulier de réalisation est donc un mode par surchauffe retardée, afin de compenser l'effacement durant une période d'heures pleines, notamment en hiver.

Dans un tel cas, on vise à ce que la température $T_{ret}$ de retour d'eau atteigne une valeur optimale $T_{opt}$ séparée d'un écart $\Delta T_{opt}$ négatif de la valeur de température de consigne de retour d'eau $T_{cons}(t_1)$ prévue pour l'instant $t_1$. La durée de désactivation peut alors être déterminée grâce au calcul de la pente de baisse de température d'eau de retour du réseau à partir des points de démarrage et d'arrêt de la pompe à chaleur, par approximation linéaire par exemple.

À chaque pas de temps, un automate évalue le temps nécessaire pour atteindre la valeur $T_{opt}$ donnée par la loi d'eau de retour modifiée affectant la température de consigne de retour d'eau, projetée à l'instant $t_1$, selon la formule (4) :

$$(4) \qquad \Delta T_{dés} = \frac{\Delta T_{opt}}{var_T}$$

Le paramètre $var_T$ correspondant alors, par exemple, à la pente de baisse de la température de fonctionnement calculée à partir des instants initiaux et finaux d'un ou plusieurs cycle(s) précédent(s) de baisse en température.

Ici, lorsque la première période de désactivation $\tau_{dés}$ recouvre au moins partiellement une période durant laquelle la consommation est habituellement élevée (heures pleines) et que la deuxième période d'activation $\tau_1$ recouvre au moins partiellement une période durant laquelle la consommation est habituellement faible (heures creuses), le fait d'arrêter la pompe à chaleur pendant la période $\tau_{dés}$, c'est-à-dire de procéder un effacement en heures pleines, puis de la réactiver de façon forcée pendant la deuxième période $\tau_{act}$ permet de maintenir une température ambiante adéquate tout en réduisant la consommation durant les heures pleines.

De plus, comme il est courant que le niveau de facturation soit plus élevé en heures pleines qu'en heures creuses, un tel procédé de contrôle par surchauffe retardée permet également de procéder à des économies.

Une telle stratégie est particulièrement avantageuse pour des plages d'heures creuses de courte durée, comme par exemple la plage d'heures creuses méridienne allant de 14h à 16h. En effet, plus la plage d'heures creuses est courte par rapport à la durée de montée en température de la pompe à chaleur du dispositif de régulation en température, plus la régulation par refroidissement est intéressante d'un point de vue énergétique et économique.

Bien entendu, le principe de ce deuxième mode principal de réalisation peut s'appliquer également à un autre mode de réalisation particulier où l'activation de la pompe à chaleur, lorsque celle-ci est réversible, est un mode de refroidissement auquel cas l'écart la température optimale $T_{opt}$, à atteindre est supérieur à l'estimation de la température de consigne de retour d'eau $T_{cons,ret}$ ($t_1$), c'est-à-dire que l'écart $\Delta T_{opt}$ prend une valeur positive, afin de compenser à retardement le réchauffement supplémentaire correspondant à la désactivation de la pompe à chaleur du dispositif durant la première période $\tau_{dés}$.

Le procédé de contrôle optimisé décrit ci-avant peut être mise en oeuvre au moyen d'un module de régulation. Ce module comporte, d'une part, des moyens de transmission capables d'indiquer, à un ou plusieurs dispositif(s) de régulation en température comprenant une pompe à chaleur auquel il est connecté, un signal de début ou de fin d'activation et/ou de désactivation. De tels moyens de transmission peuvent être filaires ou sans fil, par exemple.

Ce module de régulation comporte, d'autre part, des moyens de détermination capables de déterminer, pour chaque dispositif de régulation en température à réguler, la durée de la première période $\tau_1$ définie ci-avant en fonction des paramètres de fonctionnement de ce dispositif selon ce qui a été décrit précédemment. De tels moyens de détermination peuvent comprendre des moyens de calcul, comme un processeur, capables de calculer la durée de la période $\tau_1$ avec les formules décrites précédemment.

Dans un mode de réalisation particulier, un tel module de régulation peut être intégré avec le dispositif de régulation en température lui-même. Il est avantageux, dans ce cas, que le module de régulation comporte également des moyens de mesure de l'évolution du paramètre de fonctionnement, notamment afin d'en déduire le paramètre de variation $var_T$ décrit précédemment.

Cependant, il est également possible d'utiliser ce module de régulation à distance auquel cas le module de régulation peut comporter des moyens de réception de signaux de mesure de l'évolution du paramètre de fonctionnement, toujours afin d'en déduire le paramètre de variation $var_T$ décrit précédemment.

Un tel module de régulation à distance peut être connecté à une pluralité de dispositif de régulation en température, comprenant chacun une pompe à chaleur, afin de réguler ceux-ci aussi bien indépendamment, en fonction des caractéristiques qui leur sont propres, qu'en fonction d'une consigne globale, ce qui est particulièrement avantageux pour un opérateur énergétique désireux d'effectuer un effacement global sur un parc de dispositifs de régulation en température disposant de pompes à chaleur.

L'invention concerne également un système global comportant le module de régulation à distance précédent, ainsi qu'une pluralité de dispositifs de régulation en température, comprenant chacun une pompe à chaleur, gérés par celui-ci.

L'invention a aussi pour objet un programme d'ordinateur comprenant des instructions de code de programme pour l'exécution des étapes du procédé d'action ci-dessus lorsque ledit programme est exécuté sur un ordinateur.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module de régulation apte à être connecté à un ou plusieurs dispositif(s) de régulation en température comprenant chacune une pompe à chaleur, et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus. Un tel programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, le procédé de régulation décrit ci-avant pour un seul dispositif de régulation en température peut aussi être utilisé pour un ensemble de dispositifs d'un parc, afin de permettre un effacement adéquat et réduire l'impact sur la courbe de charge sur une échelle plus large. Une telle régulation globale peut être gérée à distance par l'opérateur en charge du parc.

Pour ce faire, les différents paramètres $\tau_1, \tau_2$, ou l'instant $t_i$ peuvent être choisis différemment pour chaque dispositif, en fonction des caractéristiques de l'installation associée telle que l'inertie du bâtiment et du réseau de régulation en température, la zone climatique, puissance thermique fournie par le dispositif de régulation en température, etc., pour permettre une gestion globale de l'effacement et éviter un simple décalage des plages de pics et de creux sur la courbe de charge globale.

On a vu que les périodes d'activation et de désactivation sont mises en oeuvre, de préférence, pendant des intervalles de temps coïncidant respectivement avec le début d'une plage d'heures pleines et d'heures creuses. Une telle coïncidence temporelle stricte n'est cependant pas nécessaire, et il peut y avoir un décalage temporel entre la période d'activation et la période de désactivation, sachant que plus ce décalage sera grand, et moins l'effacement sera efficace dans la mesure où l'effet d'inertie perdra en efficacité.

Par ailleurs, pour une installation à faible possibilité de surchauffe, il est particulièrement avantageux de déterminer l'instant $t_1$ de référence au plus près de la plage de pic de charge. En revanche, pour une installation ayant une plus grande liberté de surchauffe (c'est-à-dire pour laquelle on peut utiliser un écart prédéterminé $\Delta T_{opt}$ plus grand, comme pour les installations équipées de ballon de découplage), l'instant $t_1$ pourra être avancé par rapport à la plage de pic de charge et l'effacement sera maintenu plus longtemps. Ce principe est valable aussi bien pour un fonctionnement en surchauffe qu'en refroidissement.

En outre, le procédé ci-avant concerne également le cas où une même période de désactivation serait précédée par une première période d'activation et suivie par une deuxième période d'activation, auquel cas il conviendrait alors de procéder à la détermination de la durée de la première période d'activation et de la période de désactivation, sur la base de ce qui est décrit ci-avant. Un tel procédé combine alors les avantages des deux modes principaux de réalisation décrits ci-avant, ce qui le rend particulièrement avantageux.

Par ailleurs, l'exemple particulier d'une pompe à chaleur de type air/eau dans lequel la température de retour d'eau est utilisée comme paramètre de fonctionnement de la pompe à chaleur a été décrit précédemment. Cependant, l'invention peut s'appliquer à tout type de pompe à chaleur, réversible ou non.

En particulier, dans le cas d'une pompe à chaleur de type air/eau ou eau/eau, la température de retour d'eau ou la température de départ d'eau peuvent être utilisées comme paramètre de fonctionnement, car elles présentent l'avantage d'être facilement mesurables. Avantageusement, le paramètre de fonctionnement peut dépendre d'une formule impliquant ces températures de retour d'eau et de départ d'eau (par exemple de la moyenne pondérée de ces deux paramètres), ce qui permet de lisser le comportement du dispositif.

L'invention peut également s'appliquer à une pompe à chaleur de type air/air. Dans ce cas, le paramètre de fonctionnement peut soit être la température de l'air de soufflage (sortant de la pompe), soit être la température de l'air de reprise (rentrant dans la pompe), soit dépendre d'une formule impliquant ces deux températures (par exemple de la moyenne pondérée de ces deux températures), ce qui permet de lisser le comportement de la pompe.


**Revendications**

1. Procédé de contrôle optimisé d'au moins un dispositif de régulation en température comprenant une pompe à chaleur, le procédé comprenant la désactivation de la pompe à chaleur pendant une période de désactivation ($\tau_{dés}$) comprise au moins en partie dans une période durant laquelle s'applique un premier niveau de facturation et l'activation de la pompe à chaleur pendant au moins une période d'activation ($\tau_{act}$) comprise au moins en partie dans une période durant laquelle s'applique un deuxième niveau de facturation inférieur au premier niveau de facturation, **caractérisé par** :

   l'estimation de la valeur, pour un instant de référence ($t_1$) choisi entre lesdites périodes, d'une température de consigne de fonctionnement ($T_{cons}(t_1)$) de la pompe à chaleur ;
   la détermination d'une température de fonctionnement optimisée ($T_{opt}$) ladite température de fonctionnement optimisée s'écartant de ladite valeur estimée ($T_{cons}(t_1)$) de la température de consigne de fonctionnement à l'instant de référence ($t_1$) au moins d'un écart prédéterminé ($\Delta T_{opt}$) pour compenser au cours de la période d'activation un effacement réalisé au cours de la période de désactivation; et
   la détermination de la durée ($\Delta\tau_1$) de la première desdites périodes d'un point de vue chronologique ($\tau_1$) en fonction de ladite température de fonctionnement optimisée ($T_{opt}$), ladite durée ($\Delta\tau_1$) étant calculée afin que la température de fonctionnement ($T_{fonc}$), mesurée pour évaluer le fonctionnement de la pompe à chaleur, évolue pendant ladite première période pour atteindre, audit instant de référence ($t_1$), ladite température de fonctionnement optimisée ($T_{opt}$).

2. Procédé de contrôle optimisé selon la revendication 1, **caractérisé en ce que** ladite durée ($\Delta\tau_1$) est calculée selon la formule :

$$\Delta\tau_1 = \frac{\left|T_{opt} - T_{cons}(t_1)\right|}{\mathrm{var}_T},$$

dans laquelle $T_{opt}$ désigne ladite valeur optimisée du paramètre de fonctionnement, $T_{cons}(t_1)$ désigne ladite valeur estimée du paramètre de référence à l'instant de référence $t_1$ et $\mathrm{var}_T$ désigne une vitesse de variation déduite de la mesure dudit paramètre de fonctionnement.

3. Procédé de contrôle optimisé selon la revendication 2, dans lequel la mesure du paramètre de fonctionnement présente une pluralité de cycles pendant lesquels ledit paramètre de fonctionnement varie entre deux valeurs minimales en passant par une valeur maximale, **caractérisé en ce que** la vitesse de variation ($var_T$) est déduite de la vitesse de variation entre ladite valeur maximale et l'une desdites valeurs minimale lors d'au moins un desdits cycles.

4. Procédé de contrôle optimisé selon l'une des revendications précédentes, dans lequel le dispositif de régulation en température est utilisé pour chauffer au moins une pièce d'un bâtiment, **caractérisé en ce que** la valeur du paramètre de référence est estimée en fonction de l'estimation la température extérieure audit bâtiment à l'instant de référence.

5. Procédé de contrôle optimisé selon l'une des revendications précédentes, dans lequel au moins une pièce d'un bâtiment chauffée par le dispositif de régulation en température est soumise à une température ambiante ($T_A$), **caractérisé en ce que** le paramètre de référence dépend d'une température de consigne d'air ambiant ($T_{cons,A}$) et **en ce que**, durant la période d'activation et/ou de désactivation, la pompe à chaleur retourne dans un mode de régulation classique (101) par rapport au paramètre de référence si l'écart en valeur absolue entre ladite température ambiante ($T_A$) et la température de consigne d'air ambiant ($T_{cons,A}$) est supérieure (113, 115) à une écart prédéterminé de confort ($\Delta T_A$), la température de fonctionnement du dispositif de régulation étant régulé en fonction de ladite température de consigne de fonctionnement dans ledit mode de régulation classique.

6. Procédé de contrôle optimisé selon l'une des revendications 1 à 5, **caractérisé en ce que** la période d'activation précède la période de désactivation.

7. Procédé de contrôle optimisé selon l'une des revendications 1 à 6, **caractérisé en ce que** la période d'activation succède à la période de désactivation.

8. Procédé de contrôle optimisé selon l'une des revendications 6 ou 7, dans lequel la pompe à chaleur peut fonctionner dans un mode de chauffage et/ou de refroidissement, **caractérisé en ce que** l'activation de la pompe à chaleur pendant une période d'activation consiste à positionner la pompe à chaleur dans l'un desdits modes.

9. Procédé de contrôle optimisé selon l'une des revendications 1 à 8, **caractérisé en ce que** la au moins une période d'activation ($\tau_{act}$) et la période de désactivation ($\tau_{dés}$) sont substantiellement adjacentes temporellement.

10. Procédé de contrôle optimisé selon l'une des revendications 1 à 9, dans lequel la pompe à chaleur est une pompe à chaleur de type air/eau ou eau/eau, **caractérisé en ce que** le paramètre de référence dépend de la température de consigne de retour d'eau et/ou de départ d'eau de la pompe à chaleur et le paramètre de fonctionnement dépend de la température de retour d'eau et/ou de départ d'eau de la pompe à chaleur.

11. Procédé de contrôle optimisé selon l'une des revendications 1 à 10, dans lequel la pompe à chaleur est une pompe à chaleur de type air/air, **caractérisé en ce que** le paramètre de référence dépend de la température de consigne d'air de soufflage et/ou de reprise de la pompe à chaleur et le paramètre de fonctionnement dépend de la température d'air de soufflage et/ou de reprise de la pompe à chaleur.

12. Module de contrôle optimisé d'au moins un dispositif de régulation en température comprenant une pompe à chaleur, **caractérisé en ce qu'**il comprend des moyens de transmission, aptes à envoyer audit au moins un dispositif de régulation en température un signal d'activation pour activer la pompe à chaleur pendant au moins une période d'activation et un signal de désactivation pour désactiver la pompe à chaleur pendant une période de désactivation, et des moyens de détermination aptes à déterminer, pour chaque dispositif de régulation en température à réguler, au moins la durée ($\Delta \tau_1$) de la première desdites périodes d'un point de vue chronologique au moyen du procédé de contrôle optimisé selon l'une des revendications 1 à 11.

13. Système de régulation en température optimisé en consommation énergétique, comprenant une pluralité de dispositifs de régulation en température comprenant chacun une pompe à chaleur, et un module de contrôle optimisé selon la revendication 12, ledit module de contrôle optimisé étant apte à contrôler chacun desdits dispositifs de régulation en température au moyen du procédé de contrôle optimisé selon l'une des revendications 1 à 11.

14. Produit de programme d'ordinateur enregistré sur un support de mémorisation pour exécution par un ordinateur, **caractérisé en ce que** lors de l'exécution par un ordinateur, celui-ci permet la mise en oeuvre du procédé de contrôle optimisé, au niveau d'au moins un dispositif de régulation en température comprenant une pompe à chaleur, selon l'une des revendications 1 à 11.

**Patentansprüche**

1. Verfahren zur optimierten Steuerung mindestens einer eine Wärmepumpe enthaltenden Temperaturregelvorrichtung, wobei das Verfahren die Deaktivierung der Wärmepumpe während eines Deaktivierungszeitraums ($\tau_{dés}$), der zumindest zum Teil in einem Zeitraum enthalten ist, während dessen eine erste Abrechnungsstufe anwendbar ist, und die Aktivierung der Wärmepumpe während mindestens eines Aktivierungszeitraums ($\tau_{act}$) enthält, der zumindest zum Teil in einem Zeitraum enthalten ist, während dessen eine zweite Abrechnungsstufe niedriger als die erste Abrechnungsstufe anwendbar ist, **gekennzeichnet durch**:

   die Schätzung des Werts, für einen zwischen den Zeiträumen gewählten Bezugszeitpunkt ($t_1$), einer Betriebs-Solltemperatur ($T_{cons}$ ($t_1$)) der Wärmepumpe;
   die Bestimmung einer optimierten Betriebstemperatur ($T_{opt}$), wobei die optimierte Betriebstemperatur vom Schätzwert ($T_{cons}$ ($t_1$)) der Betriebs-Solltemperatur zum Bezugszeitpunkt ($t_1$) um mindestens eine vorbestimmte Abweichung ($\Delta T_{opt}$) abweicht, um während des Aktivierungszeitraums ein während des Deaktivierungszeitraums durchgeführtes Unterdrücken zu kompensieren; und
   die Bestimmung der Dauer ($\Delta\tau_1$) des chronologisch gesehen ersten der Zeiträume ($\tau_1$) abhängig von der optimierten Betriebstemperatur ($T_{opt}$), wobei die Dauer ($\Delta\tau_1$) so berechnet wird, dass die Betriebstemperatur ($T_{fonc}$), gemessen zur Ermittlung des Betriebs der Wärmepumpe, sich während des ersten Zeitraums ändert, um zum Bezugszeitpunkt ($t_1$) die optimierte Betriebstemperatur ($T_{opt}$) zu erreichen.

2. Optimiertes Steuerverfahren nach Anspruch 1, **dadurch gekennzeichnet, dass** die Dauer ($\Delta\tau_1$) gemäß der folgenden Formel berechnet wird:

$$\Delta\tau_1 = \frac{\left|T_{opt} - T_{cons}(t_1)\right|}{var_T}$$

   wobei $T_{opt}$ den optimierten Wert des Betriebsparameters, $T_{cons}$ ($t_1$) den Schätzwert des Bezugsparameters zum Bezugszeitpunkt $t_1$ und $var_T$ eine Änderungsgeschwindigkeit bezeichnet, die vom Messwert des Betriebsparameters abgeleitet wird.

3. Optimiertes Steuerverfahren nach Anspruch 2, wobei die Messung des Betriebsparameters eine Vielzahl von Zyklen aufweist, während deren der Betriebsparameter zwischen zwei Minimalwerten variiert, indem er über einen Maximalwert geht, **dadurch gekennzeichnet, dass** die Änderungsgeschwindigkeit ($var_T$) von der Änderungsgeschwindigkeit zwischen dem Maximalwert und einem der Minimalwerte während mindestens eines der Zyklen abgeleitet wird.

4. Optimiertes Steuerverfahren nach einem der vorhergehenden Ansprüche, wobei die Temperaturregelvorrichtung verwendet wird, um mindestens einen Raum eines Gebäudes zu heizen, **dadurch gekennzeichnet, dass** der Wert des Bezugsparameters abhängig von der Schätzung der Temperatur außerhalb des Gebäudes zum Bezugszeitpunkt geschätzt wird.

5. Optimiertes Steuerverfahren nach einem der vorhergehenden Ansprüche, wobei mindestens ein von der Temperaturregelvorrichtung geheizter Raum eines Gebäudes einer Umgebungstemperatur ($T_A$) ausgesetzt ist, **dadurch gekennzeichnet, dass** der Bezugsparameter von einer Umgebungsluft-Solltemperatur ($T_{cons,A}$) abhängt, und dass während des Aktivierungszeitraums und/oder des Deaktivierungszeitraums die Wärmepumpe in eine klassische Regelungsbetriebsart (101) bezüglich des Bezugsparameters zurückkehrt, wenn die Abweichung im Absolutwert zwischen der Umgebungstemperatur ($T_A$) und der Umgebungsluft-Solltemperatur ($T_{cons,A}$) höher ist (113, 115) als eine vorbestimmte Komfort-Abweichung ($\Delta T_A$), wobei die Betriebstemperatur der Regelvorrichtung abhängig von der Betriebs-Solltemperatur in der klassischen Regelbetriebsart geregelt wird.

6. Optimiertes Steuerverfahren nach einem der Ansprüche 1 bis 5, **dadurch gekennzeichnet, dass** der Aktivierungszeitraum vor dem Deaktivierungszeitraum liegt.

7. Optimiertes Steuerverfahren nach einem der Ansprüche 1 bis 6, **dadurch gekennzeichnet, dass** der Aktivierungszeitraum auf den Deaktivierungszeitraum folgt.

8. Optimiertes Steuerverfahren nach einem der Ansprüche 6 oder 7, wobei die Wärmepumpe in einer Heiz- und/oder Kühlbetriebsart arbeiten kann, **dadurch gekennzeichnet, dass** die Aktivierung der Wärmepumpe während eines Aktivierungszeitraums darin besteht, die Wärmepumpe in einer der Betriebsarten zu positionieren.

9. Optimiertes Steuerverfahren nach einem der Ansprüche 1 bis 8, **dadurch gekennzeichnet, dass** der mindestens eine Aktivierungszeitraum ($\tau_{act}$) und der Deaktivierungszeitraum ($\tau_{dés}$) zeitlich im Wesentlichen benachbart sind.

10. Optimiertes Steuerverfahren nach einem der Ansprüche 1 bis 9, wobei die Wärmepumpe eine Wärmepumpe von der Art Luft/Wasser oder Wasser/Wasser ist, **dadurch gekennzeichnet, dass** der Bezugsparameter von der Wasserrücklauf- und/oder Wasseraustritt-Solltemperatur der Wärmepumpe abhängt, und der Betriebsparameter von der Wasserrücklauf- und/oder Wasseraustrittstemperatur der Wärmepumpe abhängt.

11. Optimiertes Steuerverfahren nach einem der Ansprüche 1 bis 10, wobei die Wärmepumpe eine Luft/Luft-Wärmepumpe ist, **dadurch gekennzeichnet, dass** der Bezugsparameter von der Gebläseluft- und/oder Rückluft-Solltemperatur der Wärmepumpe abhängt, und der Betriebsparameter von der Gebläseluft- und/oder Rücklufttemperatur der Wärmepumpe abhängt.

12. Optimiertes Steuermodul mindestens einer eine Wärmepumpe enthaltenden Temperaturregelvorrichtung, **dadurch gekennzeichnet, dass** es Übertragungseinrichtungen, die fähig sind, an die mindestens eine Temperaturregelvorrichtung ein Aktivierungssignal, um die Wärmepumpe während mindestens eines Aktivierungszeitraums zu aktivieren, und ein Deaktivierungssignal, um die Wärmepumpe während eines Deaktivierungszeitraums zu deaktivieren, zu schicken, und Bestimmungseinrichtungen enthält, die fähig sind, für jede zu regelnde Temperaturregelvorrichtung mindestens die Dauer ($\Delta\tau_1$) des chronologisch gesehen ersten der Zeiträume mittels des optimierten Steuerverfahrens nach einem der Ansprüche 1 bis 11 zu bestimmen.

13. Bezüglich des Energieverbrauchs optimiertes Temperaturregelsystem, das eine Vielzahl von je eine Wärmepumpe enthaltenden Temperaturregelvorrichtungen und ein optimiertes Steuermodul nach Anspruch 12 enthält, wobei das optimierte Steuermodul fähig ist, jede der Temperaturregelvorrichtungen mittels des optimierten Steuerverfahrens nach einem der Ansprüche 1 bis 11 zu steuern.

14. Computerprogrammprodukt, das zur Ausführung durch einen Computer auf einem Speicherträger gespeichert ist, **dadurch gekennzeichnet, dass** bei der Ausführung durch einen Computer dieser die Anwendung des optimierten Steuerverfahrens im Bereich mindestens einer eine Wärmepumpe enthaltenden Temperaturregelvorrichtung nach eine der Ansprüche 1 bis 11 erlaubt.

## Claims

1. Method for the optimised control of at least one temperature control device comprising a heat pump, the method comprising the deactivation of the heat pump during a deactivation period ($\tau_{dés}$), at least partially included in a period during which a first billing level is applied, and the activation of the heat pump during at least one activation period ($\tau_{act}$), at least partially included in a period during which a second billing level is applied, said second billing level being less than the first billing level, **characterised by**:

the estimation of the value, for a reference time ($t_1$) chosen between said periods, of an operating temperature setpoint ($T_{cons}(t_1)$) of the heat pump;
the determination of an optimised operating temperature ($T_{opt}$), said optimised operating temperature differing from said estimated value ($T_{cons}(t1)$) of the operating temperature setpoint at the reference time ($t_1$) by at least a predetermined deviation ($\Delta T_{opt}$) to offset during the activation period, a curtailment taking place during the deactivation period; and
the determination of the duration ($\Delta\tau_1$) of the first of said periods from a chronological point of view ($\tau_1$) according to said optimised operating temperature ($T_{opt}$), said duration ($\Delta\tau_1$) being calculated such that the operating temperature ($T_{fonc}$) measured to assess the operation of the heat pump, evolves during said first period to reach, at said reference time ($t_1$), said optimised operating temperature ($T_{opt}$).

2. Method for optimised control according to claim 1, **characterised in that** said duration ($\Delta\tau_1$) is calculated according

to the following formula:

$$\Delta\tau_1 = \frac{\left|T_{opt} - T_{cons}(t_1)\right|}{var_T},$$

wherein $T_{opt}$ represents said optimised value of the operating parameter, $T_{cons}(t_1)$ represents said estimated value of the reference parameter at the reference time $t_1$ and $var_T$ represents a variation speed deduced from the measurement of said operating parameter.

3. Method of optimised control according to claim 2, wherein the measurement of the operating parameter has a plurality of cycles, during which said operating parameter varies between two minimum values, passing through a maximum value, **characterised in that** the variation speed ($var_T$) is deduced from the variation speed between said maximum value and one of said minimum values during at least one of said cycles.

4. Method of optimised control according to one of the previous claims, wherein the temperature control device is used to heat at least one room in a building, **characterised in that** the value of the reference parameter is estimated according to the estimation of the outdoor temperature at said building at the reference time.

5. Method of optimised control according to one of the previous claims, wherein at least one room in a building heated by the temperature control device is subjected to an ambient temperature ($T_A$), **characterised in that** the reference parameter depends on an ambient air temperature setpoint ($T_{cons,A}$) and **in that**, during the activation and/or deactivation period, the heat pump switches back to a conventional control mode (101) in relation to the reference parameter if the absolute value deviation between said ambient temperature ($T_A$) and the ambient air temperature setpoint ($T_{cons,A}$) is greater (113, 115) than a predetermined comfort deviation ($\Delta T_A$), whereby the operating temperature of the control device is controlled according to said operating temperature setpoint in said conventional control mode.

6. Method of optimised control according to one of claims 1 to 5, **characterised in that** the activation period precedes the deactivation period.

7. Method of optimised control according to one of claims 1 to 6, **characterised in that** the activation period succeeds the deactivation period.

8. Method of optimised control according to one of claims 6 or 7, wherein the heat pump can operate in a heating and/or cooling mode, **characterised in that** the activation of the heat pump during an activation period consists in positioning the heat pump in one of said modes.

9. Method of optimised control according to one of claims 1 to 8, **characterised in that** the at least one activation period ($\tau_{act}$) and the deactivation period ($\tau_{dés}$) are substantially adjacent in time.

10. Method of optimised control according to one of claims 1 to 9, wherein the heat pump is an air-to-water or a water-to-water heat pump, **characterised in that** the reference parameter depends on the temperature setpoint of the returning and/or outgoing water of the heat pump and the operating parameter depends on the temperature of the returning and/or outgoing water of the heat pump.

11. Method of optimised control according to one of claims 1 to 10, wherein the heat pump is an air-to-air heat pump, **characterised in that** the reference parameter depends on the temperature setpoint of the outgoing or returning air of the heat pump and the operating parameter depends on the temperature of the outgoing and/or returning air of the heat pump.

12. Module for the optimised control of at least one temperature control device, comprising a heat pump, **characterised in that** it comprises transmission means capable of sending, to said at least one temperature control device, an activation signal in order to activate the heat pump during at least one activation period, and a deactivation signal in order to deactivate the heat pump during a deactivation period, and determination means capable of determining, for each temperature control device to be controlled, at least the duration ($\Delta\tau_1$) of the first of said periods from a chronological point of view, by means of the method of optimised control according to one of claims 1 to 11.

**13.** Optimised energy-saving temperature control system comprising a plurality of temperature control devices each comprising a heat pump, and an optimised control module according to claim 12, said optimised control module being capable of controlling each of said temperature control devices by means of the method of optimised control according to one of claims 1 to 11.

**14.** Computer programme saved on a storage medium in order to be executed by a computer, **characterised in that** during its execution by a computer, said programme is used to implement the method of optimised control, at the level of at least one temperature control device comprising a heat pump, according to one of claims 1 to 11.

FIG. 1

EP 2 339 255 B1

**FIG. 2**

FIG. 3

**FIG. 4**

100'

101' — REG APP

APP: MF$_{norm}$ (ON/OFF)

103' — DET $\Delta\tau_{act}$

FIG. 5A

105' — $t \in \tau_{act}$ ? — –

+

107' — APP ON

APP: ON — +

115' — $|T_A - T_{cons,A}| \leq \Delta T_A$ ? — –

109' — $t \in \tau_{act}$ ? — +

–

111' — STOP APP

APP: OFF

113' — $t \in \tau_{dés}$ ?
$|T_A - T_{cons,A}| \leq \Delta T_A$ ? — +

–

FIG. 5B

**FIG. 5C**

EP 2 339 255 B1

FIG. 6

100"

101" — REG APP

APP: MF$_{norm}$ (ON/OFF)

103" — DET $\Delta\tau_{act}$

105" — $t \in \tau_{dés}$ ? — −

+

107" — STOP APP

APP: OFF

115" — $|T_A - T_{cons,A}| \leq \Delta T_A$ ? — −

109" — $t \in \tau_{act}$ ? — +

−

111" — APP ON

APP: ON

113" — $t \in \tau_{act}$ ? $|T_A - T_{cons,A}| \leq \Delta T_A$ ? — +

−

**EP 2 339 255 B1**

## RÉFÉRENCES CITÉES DANS LA DESCRIPTION

**Documents brevets cités dans la description**

- US 20050005621 A
- EP 0688085 A
- FR 2793643

**Littérature non-brevet citée dans la description**

- **GUILLAUME FOGGIA.** *Optimisation de pilotage d'installation résidentielle de chauffage par micro-cogénération*